# EUROPÄISCHE PATENTSCHRIFT

(11) **EP 2 803 061 B1**
(45) Veröffentlichungstag und Bekanntmachung des Hinweises auf die Patenterteilung: **21.10.2015**
(21) Anmeldenummer: 12805957.3
(22) Anmeldetag: 27.11.2012
(51) Int. Cl.: G08G 1/16, G01S 13/93, G01S 15/93

(54) **VERFAHREN ZUR ABTASTUNG DER UMGEBUNG EINES SICH BEWEGENDEN FAHRZEUGS**
METHOD FOR SCANNING THE ENVIRONMENT OF A MOVING VEHICLE
PROCÉDÉ DE BALAYAGE DE L'ENVIRONNEMENT D'UN VÉHICULE EN MOUVEMENT

(30) Priorität: 11.01.2012 DE 102012200336
(43) Veröffentlichungstag der Anmeldung: 19.11.2014
(73) Patentinhaber: Robert Bosch GmbH, 70442 Stuttgart (DE)
(72) Erfinder: EISELE, Andreas, 70771 Leinfelden-Echterdingen (DE)
(86) Internationale Anmeldenummer: PCT/EP2012/073738
(87) Internationale Veröffentlichungsnummer: WO 2013/104459

(56) Entgegenhaltungen:
- EP-A1- 1 475 648
- DE-A1- 10 216 346
- DE-A1-102005 046 054
- DE-A1-102005 056 800
- DE-A1-102006 053 620

## Beschreibung

### Stand der Technik

Die Erfindung betrifft ein Verfahren zur Abtastung der Umgebung eines sich bewegenden Fahrzeugs unter Verwendung mindestens zweier an einer Seite des Fahrzeugs angeordneten Sensoren sowie ein Computerprogrammprodukt und eine Vorrichtung zur Durchführung des Verfahrens.

In modernen Fahrzeugen werden verschiedene Fahrassistenzsysteme eingesetzt, die mit Hilfe von Daten über die Umgebung des Fahrzeugs den Fahrer bei der Durchführung verschiedener Fahrmanöver unterstützen. Diese Fahrassistenzsysteme umfassen beispielsweise Einparksysteme, welche selbstständig Parklücken erkennen und das Fahrzeug in die Parklücke führen können. Ein weiteres Beispiel sind Rückfahrassistenten, die den Fahrweg während des Rückwärtsfahrens auf Hindernisse überprüfen. Zur Erfüllung ihrer Aufgaben benötigen die genannten Systeme ein möglichst genaues Abbild der Umgebung des Fahrzeugs. Dieses Abbild der Umgebung wird mit verschiedenen Sensoren erzeugt, beispielsweise mit Hilfe von Ultraschallsensoren oder Radarsensoren. Dabei wird von einem Sender ein Signal ausgesendet, dessen Echo bei Reflektion an einem Hindernis von einem Empfänger am Fahrzeug registriert wird. Aus der Zeit, die zwischen Aussenden und Empfangen des Signals vergangen ist und der bekannten Ausbreitungsgeschwindigkeit des Signals kann der Abstand zwischen dem Fahrzeug und dem reflektierenden Hindernis berechnet werden. Werden eine Vielzahl solcher Messungen hintereinander ausgeführt, wobei entweder die Abstrahlrichtung oder die Position des Fahrzeugs verändert wird, entsteht nach und nach ein Abbild der Umgebung.

In der Schrift DE 10 2005 046 054 A1 wird eine Vorrichtung und ein Verfahren zur Unterstützung eines Einparkvorgangs beschrieben, bei dem die Empfindlichkeit eines zweiten Sensors in Abhängigkeit von einem Messergebnis eines in Fahrtrichtung ersten Sensors einstellbar ist.

Aus DE 10 2006 043 345 A1 ist eine Vorrichtung und ein Verfahren zur Durchführung von Abstandsmessungen für eine Einparkhilfe eines Kraftfahrzeugs bekannt. Das Fahrzeug umfasst mehrere Ultraschallsensoren, unter anderem zwei an jeder Seite und weitere an den Ecken. Die Seitensensoren sind für die Abtastung des Fernfeldes und die Ecksensoren für die Abtastung des Nahfeldes eingerichtet. Zur Unterstützung der späteren Datenauswertung werden in einer Ausführungsform die Datenübermittlungen der Ultraschallsensoren synchronisiert.

Aus EP 1 475 648 A1 sind eine Vorrichtung und ein Verfahren zur Vermessung von Parklücken bekannt. Das Vermessen der Breite und der Tiefe einer Parklücke erfolgt über ultraschallbasierte Abstandssensoren. In dem beschriebenen Verfahren wird die Rate, mit der Messungen durch die Abstandssensoren durchgeführt werden, in Abhängigkeit der Geschwindigkeit des Fahrzeugs festgelegt. Bei hohen Fahrzeuggeschwindigkeiten wird die Abtastrate erhöht, um eine ausreichende Längenauflösung sicherzustellen. Bei geringer Geschwindigkeit wird die Rate gesenkt, um die Parklückentiefe mit hoher Tiefenauflösung vermessen zu können. Unter Auflösung wird die kleinste von dem jeweiligen Abstandssensor unterscheidbare Größe verstanden. Die Tiefenauflösung gibt dabei den kleinsten Unterschied im Abstand eines Objekts vom Fahrzeug an, die vom Abstandssensor nachgewiesen werden kann. Die Längenauflösung wird auf die Bewegungsrichtung des Fahrzeugs bezogen und gibt eine Grenze für die Messgenauigkeit von Strecken vor, die bei der Vorbeifahrt mit Hilfe der Abstandssensoren ermittelt werden.

Bei der Abtastung der Umgebung des Fahrzeugs ist eine hohe Abtastrate gefordert, da diese die Längenauflösung mitbestimmt und damit maßgeblich dafür ist, ob kleine Objekte erkannt werden können und mit welchem Fehler beispielsweise die Bestimmung der Parklückenlänge erfolgt. Dabei lässt sich die Abtastrate eines Sensors, insbesondere bei bestehenden Systemen, nicht beliebig steigern. Bei ultraschallbasierten Messsystemen kommt erschwerend hinzu, dass die Ausbreitungsgeschwindigkeit des Schalls in Luft mit etwa 340 m/s vergleichsweise gering ist. Sollen Objekte mit einer maximalen Entfernung von etwa 1 m detektiert werden, muss ein Ultraschallpuls dazu eine Strecke von 2 m zurücklegen, wofür der Puls etwa 6 ms benötigt. Zur Gewährleistung der Eindeutigkeit kann innerhalb dieser Wartezeit kein weiterer Ultraschallpuls ausgesendet werden.

Eine weitere Möglichkeit zur effektiven Erhöhung der Abtastrate ist das Vorsehen mehrerer Ultraschallsensoren am Fahrzeug, beispielsweise zwei Seitensensoren wobei einer der Sensoren im Frontbereich und einer im Heckbereich des Fahrzeugs angeordnet wird. Die effektive Ortsauflösung wird dadurch jedoch nicht in jeder Fahrsituation verdoppelt. Beträgt beispielsweise der Abstand der beiden Sensoren zueinander 4 m und werden diese mit einer Abtastfrequenz von 50 Hz betrieben, wird bei einer Fahrzeuggeschwindigkeit von 10 m/s von dem hinteren Sensor der gleiche Ort abgetastet, wie vom ersten Sensor zwanzig Messzyklen zuvor. Die beiden Messpositionen fallen zusammen, da das Fahrzeug in 0,4 s, die der Zeitdauer von zwanzig Messzyklen entsprechen, sich um genau 4 m und damit genau um den Abstand der beiden Sensoren zueinander bewegt. Die tatsächliche effektive räumliche Auflösung wird demnach nicht in jedem Fall verbessert.

### Offenbarung der Erfindung

Die Erfindung ist definiert in den beiden unabhängigen Anspruchen 1 und 7. Erfindungsgemäß wird ein Verfahren zur Abtastung der Umgebung eines sich bewegenden Fahrzeugs vorgeschlagen, bei dem mindestens zwei an einer Seite des Fahrzeugs voneinander beabstandet angeordnete Sensoren verwendet werden, und wobei die mindestens zwei Sensoren mit einer vorgegebenen Abtastrate Abtastpunkte der Umgebung liefern. Dabei wird die Abtastung der mindestens zwei Sensoren so synchronisiert, dass die Abtastpunkte der Umgebung, in Bewegungsrichtung des Fahrzeugs gesehen, zyklisch aufeinanderfolgend von den mindestens zwei Sensoren geliefert werden.

Zur Abtastung der Umgebung des Fahrzeugs werden Sensoren eingesetzt, die beispielsweise mit Hilfe von Ultraschall, Radarmessungen, Lidar, Infrarot oder optischen Kameras den Abstand zu einem Hindernis ermitteln können. Diese Abstandsmessung erfolgt mit einer vorgegebenen Abtastrate. Bei Verwendung von ultraschallbasierten Sensoren liegt die Abtastrate beispielsweise im Bereich von 1 Hz bis 100 Hz. Während der Fahrt des Fahrzeugs wird die Umgebung auf einer Seite des Fahrzeugs mit Hilfe von mindestens zwei Sensoren abgetastet. Werden beispielsweise auf einer Seite zwei Sensoren verwendet, kann ein Sensor im Frontbereich und ein Sensor im Heckbereich des Fahrzeugs angeordnet werden.

Würden die beiden Sensoren bei der Abtastung insofern synchronisiert werden, dass diese zu gleichen Zeitpunkten mit einer fest vorgegebenen Rate Abtastungen der Umgebung vornehmen, so würden bei bestimmten Geschwindigkeiten des Fahrzeugs die Orte, an denen der hintere Sensor Abtastungen vornimmt mit den Orten, an denen der vordere Sensor Abtastungen vornimmt, zusammenfallen. Eine solche Situation, bei der sich die effektive räumliche Auflösung halbiert, da bestimmte Bereiche der Umgebung mehrfach abgetastet werden, ergibt sich beispielsweise für eine Fahrzeuggeschwindigkeit von 10 m/s wenn die zwei Sensoren einen Abstand zueinander von 4 m aufweisen und eine Abtastfrequenz von 50 Hz verwendet wird. Dabei gilt ein Bereich der Umgebung als mehrfach abgetastet, wenn die Orte, an denen Abtastungen vorgenommen werden, so dicht beieinander liegen, dass die durch die Messauflösung der Sensoren vorgegebenen Messbereiche zumindest teilweise überlappen.

Bei dem erfindungsgemäßen Verfahren werden die mindestens zwei Sensoren so synchronisiert, dass die Abtastpunkte der Umgebung, in Bewegungsrichtung des Fahrzeugs gesehen, zyklisch aufeinanderfolgend von den mindestens zwei Sensoren geliefert werden. Dadurch wird ein mehrfaches Abtasten eines Bereichs der Umgebung des Fahrzeugs vermieden. Dazu wird in einer Ausführungsform des Verfahrens die Abtastrate in Abhängigkeit der Fahrzeuggeschwindigkeit und des Abstands der Sensoren zueinander geregelt. Bei Verwendung von zwei Sensoren wird dazu die Bedingung vorgegeben, dass die Anzahl n der Abtastpunkte, die auf einer Strecke die dem Abstand d zwischen den beiden Sensoren entspricht, ungerade ist. Wird beispielsweise n = 39 gewählt ergibt sich für einen Abstand d der beiden Sensoren zueinander von 4 m ein räumlicher Abstand zwischen zwei Abtastpunkten von 10,26 cm. Für eine optimale räumliche Auflösung sollen die Sensoren die Punkte zyklisch aufeinanderfolgend abtasten. Bei beispielsweise drei Sensoren wird, in Bewegungsrichtung des Fahrzeugs gesehen, der erste Abtastpunkt vom ersten Sensor, der zweite Abtastpunkt vom zweiten Sensor und der dritte Abtastpunkt vom dritten Sensor geliefert. Danach beginnt der Zyklus wieder von vorne, das heißt der vierte Abtastpunkt wird wieder vom ersten Sensor geliefert. Für das vorliegende Beispiel mit zwei Sensoren tasten die beiden Sensoren die Punkte abwechselnd ab, das heißt jeder Sensor liefert alle 20,51 cm einen Abtastpunkt der Umgebung. Bei einer Fahrzeuggeschwindigkeit v von 10 m/s muss die Abtastfrequenz f folglich mit f = v/(2 · d/n) gewählt werden, worauf sich für dieses Beispiel eine Abtastrate von 48,75 Hz ergibt. Durch das Senken der Abtastrate von 50 Hz auf 48,75 Hz kann in diesem Beispiel die effektive räumliche Auflösung verdoppelt werden, da die Abtastung der Umgebung mit den beiden Sensoren verschachtelt erfolgt, das heißt in Bewegungsrichtung des Fahrzeugs gesehen wechseln sich die beiden Sensoren bei der Abtastung ab. Dieses Verfahren wird "Speed Synchronized Interleaved Spatial Sampling", zu Deutsch "mit der Geschwindigkeit synchronisierte verschachtelte örtliche Abtastung" genannt. Das Verfahren ist auf jede Fahrzeuggeschwindigkeit anwendbar und nicht auf bestimmte Geschwindigkeiten beschränkt.

Bevorzugt wird die Synchronisierung der Sensoren kontinuierlich durchgeführt, so dass bei einer Änderung der Fahrzeuggeschwindigkeit die verwendete Abtastfrequenz bzw. der verwendete Zeitversatz nachgeführt wird.

Bevorzugt werden die Sensoren so synchronisiert, dass die Abstände zwischen zwei abgetasteten Bereichen der Umgebung im Wesentlichen äquidistant sind. Dabei ist mit im Wesentlichen gemeint, dass die Abstände zwischen zwei abgetasteten Bereichen bis auf einen Fehler in der Größe der Messauflösung der Sensoren äquidistant sind.

Zur Erleichterung der Synchronisierung und der späteren Datenauswertung ist es bevorzugt, wenn alle Sensoren mit der gleichen Abtastfrequenz arbeiten.

Erfindungsgemäß wird zur Synchronisierung der mindestens zwei Sensoren ein Zeitversatz zwischen den Abtastzeitpunkten der Sensoren zueinander geregelt. Werden beispielsweise zwei Sensoren verwendet und beträgt die Geschwindigkeit des Fahrzeugs gerade 10 m/s, fallen bei einem Sensorabstand von 4 m und einer Abtastfrequenz von 50 Hz ohne einen Zeitversatz jeweils zwei Messpunkte örtlich zusammen und einige Bereiche der Umgebung werden mehrfach abgetastet. Wird in diesem Beispiel ein zeitlicher Versatz von einer halben Messperiode, also einer einhundertstel Sekunde, eingefügt, wird wieder eine verschachtelte örtliche Abtastung mit einem Abstand zwischen zwei Abtastpunkten von 10 cm erzielt. Die einzelnen Abtastpunkte werden von den Sensoren zyklisch aufeinanderfolgend abgetastet. Bei dem Beispiel mit zwei Sensoren werden die Abtastpunkte von den beiden Sensoren wechselnd abgetastet.

In einer Ausführungsform des Verfahrens wird nur die Frequenz zur Synchronisierung der Sensoren in Abhängigkeit der Fahrzeuggeschwindigkeit und des Abstands der Sensoren zueinander geregelt.

Erfindungsgemäß wird der Zeitversatz zwischen den Abtastzeitpunkten der Sensoren zueinander in Abhängigkeit der Fahrzeuggeschwindigkeit und des Abstands der Sensoren zueinander geregelt und die gemeinsame Abtastfrequenz wird konstant gehalten.

In einer weiteren Ausführungsform des Verfahrens werden sowohl die Abtastfrequenz als auch der Zeitversatz zwischen den Abtastzeitpunkten der Sensoren zueinander in Abhängigkeit der Fahrzeuggeschwindigkeit und des Abstands der Sensoren zueinander geregelt.

Bevorzugt wird die Synchronisierung der Sensoren kontinuierlich durchgeführt, so dass bei einer Änderung der Fahrzeuggeschwindigkeit die verwendete Abtastfrequenz bzw. der verwendete Zeitversatz nachgeführt wird.

Zur Durchführung des Verfahrens sind verschiedene Sensoren geeignet, unter anderem Sensoren auf Basis von Ultraschall, Radar, Lidar, Infrarot oder optischen Kameras.

Erfindungsgemäß wird weiterhin ein Computerprogramm zur Durchführung eines der hierin beschriebenen Verfahren vorgeschlagen, wenn das Computerprogramm auf einer programmierbaren Computereinrichtung ausgeführt wird. Bei der Computereinrichtung kann es sich beispielsweise um ein Modul oder ein Steuergerät zur Implementierung einzelner Assistenzsysteme oder eines Subsystems hiervon in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, oder auf einer entfernbaren CD-Rom, DVD oder einem USB-Stick. Zusätzlich oder alternativ kann das Computerprogramm auf einer Computereinrichtung wie einem Server zum Herunterladen bereitgestellt werden, zum Beispiel über ein Datennetzwerk wie das Internet oder eine Kommunikationsverbindung entweder eine Telefonleitung oder eine drahtlose Verbindung.

Erfindungsgemäß wird weiterhin eine Vorrichtung vorgeschlagen, welche zur Durchführung des vorstehend beschriebenen Verfahrens eingerichtet ist. Die Vorrichtung umfasst ein Steuergerät und mindestens zwei Sensoren wobei die Sensoren mit einer vorgegebenen Abtastrate Abtastpunkte der Umgebung liefern, und wobei das Steuergerät eingerichtet ist die Abtastung der mindestens zwei Sensoren so zu synchronisieren, dass die Abtastpunkte der Umgebung, in Bewegungsrichtung des Fahrzeugs gesehen, zyklisch aufeinanderfolgend von den mindestens zwei Sensoren geliefert werden. Bevorzugt ist das Steuergerät eingerichtet die Sensoren so zu synchronisieren, dass die Abstände zwischen zwei abgetasteten Bereichen der Umgebung, in Bewegungsrichtung des Fahrzeugs gesehen, im Wesentlichen äquidistant sind. Mit im Wesentlichen ist gemeint, dass die Abstände zwischen zwei abgetasteten Bereichen im Rahmen der Messauflösung der Sensoren äquidistant also gleich sind. Zur Synchronisierung der Sensoren untereinander kann durch das Steuergerät die Abtastfrequenz der Sensoren in Abhängigkeit der Geschwindigkeit des Fahrzeugs und des Abstands der Sensoren zueinander geregelt werden. Dabei ist es bevorzugt, wenn alle Sensoren gleichzeitig abtasten, das heißt dass zwischen zwei Sensoren kein zeitlicher Versatz auftritt.

Erfindungsgemäß ist das Steuergerät eingerichtet, die mindestens zwei Sensoren durch Regelung eines zeitlichen Versatzes in den Abtastzeitpunkten der Sensoren zueinander in Abhängigkeit der Fahrzeuggeschwindigkeit und des Abstands der Sensoren zueinander zu regeln.

Bevorzugt werden alle Sensoren mit der gleichen Abtastrate bzw. Abtastfrequenz betrieben.

Als Sensoren werden bevorzugt Abstandssensoren verwendet, die auf Basis von Ultraschall, Radar, Lidar, Infrarot und/oder optischen Kameras arbeiten.

Kurze Beschreibung der Zeichnungen
- Figur 1: zeigt die Abtastung der Umgebung eines sich bewegenden Fahrzeugs unter Verwendung von zwei Sensoren an einer Seite des Fahrzeugs,
- Figur 2a: zeigt die räumliche Verteilung der Abtastorte zweiter Sensoren eines Fahrzeugs in Bewegungsrichtung des Fahrzeugs ohne eine Synchronisierung mit der Fahrzeuggeschwindigkeit,
- Figur 2b: zeigt die räumliche Verteilung der Abtastorte zweier Sensoren eines Fahrzeugs in Bewegungsrichtung des Fahrzeugs bei Synchronisierung der Abtastung mit der Fahrzeuggeschwindigkeit.

### Ausführungsformen der Erfindung

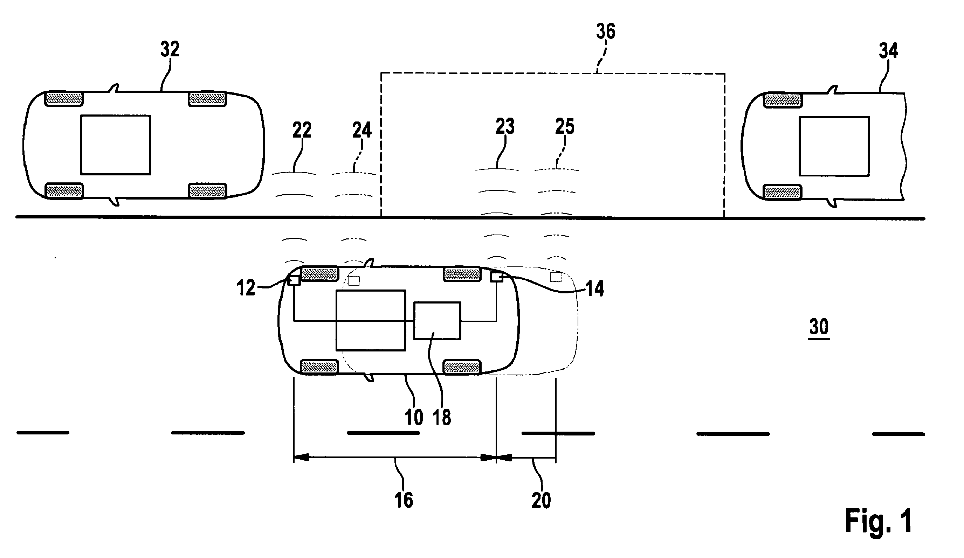

Figur 1 zeigt die Abtastung der Umgebung eines sich bewegenden Fahrzeugs.

In Figur 1 ist ein Fahrzeug 10 dargestellt an dessen Seite zwei Ultraschallsender und Empfänger 12, 14 angeordnet sind. Der erste Ultraschallsender und Empfänger 12 befindet sich im Frontbereich und der zweite Ultraschallsender und Empfänger 14 befindet sich im Heckbereich des Fahrzeugs 10. Die beiden Ultraschallsender und Empfänger 12, 14 sind durch den Abstand 16 voneinander getrennt. Die Ultraschallsender und Empfänger 12, 14 sind mit einem Steuergerät 18 verbunden.

In der in Figur 1 dargestellten Situation fährt das Fahrzeug 10 auf einer Straße 30 an zwei geparkten Autos 32, 34 vorbei. Zwischen den beiden parkenden Fahrzeugen 32, 34 befindet sich die Parklücke 36. Während der Vorbeifahrt wird die Umgebung des Fahrzeugs 10 mit Hilfe der Ultraschallsender und Empfänger 12, 14, gesteuert durch das Steuergerät 18, abgetastet. In Figur 1 sind vier Abtastpunkte 22 bis 25 dargestellt, wobei die Abtastpunkte 24, 25 zu einem ersten Zeitpunkt und die Abtastpunkt 22, 23 zu einem darauffolgenden zweiten Messzeitpunkt gehören. In der zwischen den beiden Messzeitpunkten vergangenen Zeitspanne hat sich das Fahrzeug 10 um die Strecke 20 fortbewegt. Beträgt die Fahrzeuggeschwindigkeit beispielsweise 5 m/s bewegt sich das Fahrzeug bei einer Abtastrate von 50 Hz um 10 cm weiter, bei einer Fahrzeuggeschwindigkeit von 10 m/s beträgt die Strecke 20 20 cm. In den Fällen, bei denen der Abstand 16 zwischen den beiden Ultraschallsensoren 12, 14 ein ganzzahliges Vierfaches der Strecke 20 ist, fallen die durch den ersten Sensor abgetasteten Bereichen mit den vom zweiten Sensor 14 abgetasteten Bereichen zusammen. Wird durch das erfindungsgemäße Verfahren die Abtastfrequenz der Ultraschallsensoren 12, 14 in Abhängigkeit der Geschwindigkeit des Fahrzeugs 10 und des Abstands 16 zwischen dem ersten Ultraschallsensor 12 und dem zweiten Ultraschallsensor 14 geregelt, lässt sich in der Beispielsituation die räumliche Auflösung in Bewegungsrichtung des Fahrzeugs 10 gesehen, nahezu verdoppeln. Dazu wird für eine Fahrzeuggeschwindigkeit von 10 m/s die Abtastrate auf 48,75 Hz geregelt, um 39 Abtastpunkte im Wesentlichen äquidistant zu verteilen. Statt alle 20 cm einen Bereich doppelt abzutasten wird nun alle 10,26 cm eine Abtastung vorgenommen. Bei einer Fahrzeuggeschwindigkeit von Beispielsweise 5 m/s lässt sich dieselbe Ortsauflösung von einer Abtastung alle 10,26 cm bereits mit einer Abtastrate von 24,38 Hz erzielen.

Im letzteren Beispiel mit einer Geschwindigkeit von 5 m/s ist es des Weiteren denkbar, die Anzahl der Abtastpunkte zu erhöhen. Werden auf den Abstand 16 der Sensoren zueinander bezogen 79 Abtastpunkte verteilt, erfolgt bei einer Abtastrate von 49,375 Hz alle 5,06 cm eine Abtastung der Umgebung. Die Sensoren wechseln sich dabei ab, so dass jeder Sensor alle 10,12 cm eine Abtastung vornimmt.

In einer weiteren Ausführungsform des Verfahrens wird die räumliche Auflösung in Bewegungsrichtung des Fahrzeugs 10 durch Einführung eines zeitlichen Versatzes zwischen dem ersten Ultraschallsender und Empfänger 12 und dem zweiten Ultraschallsender und Empfänger 14 erhöht. Im Fall des genannten Beispiels würde ein zeitlicher Versatz von 10 ms zwischen den beiden Sensoren die räumliche Auflösung verdoppeln.

In beiden Fällen werden die beiden Sensoren so synchronisiert, dass eine verschachtelte örtliche Abtastung der Fahrzeugumgebung erzielt wird, bei der die beiden Sensoren sich bei der Abtastung der Umgebung abwechseln.

Neben dem in Figur 1 dargestellten Ausführungsbeispiel mit zwei Sensoren sind auch weitere Ausführungsformen der Erfindung mit drei oder mehr Sensoren denkbar.

Bevorzugt wird die Synchronisierung der Sensoren kontinuierlich durchgeführt, so dass bei einer Änderung der Fahrzeuggeschwindigkeit die verwendete Abtastfrequenz bzw. der verwendete Zeitversatz nachgeführt wird.

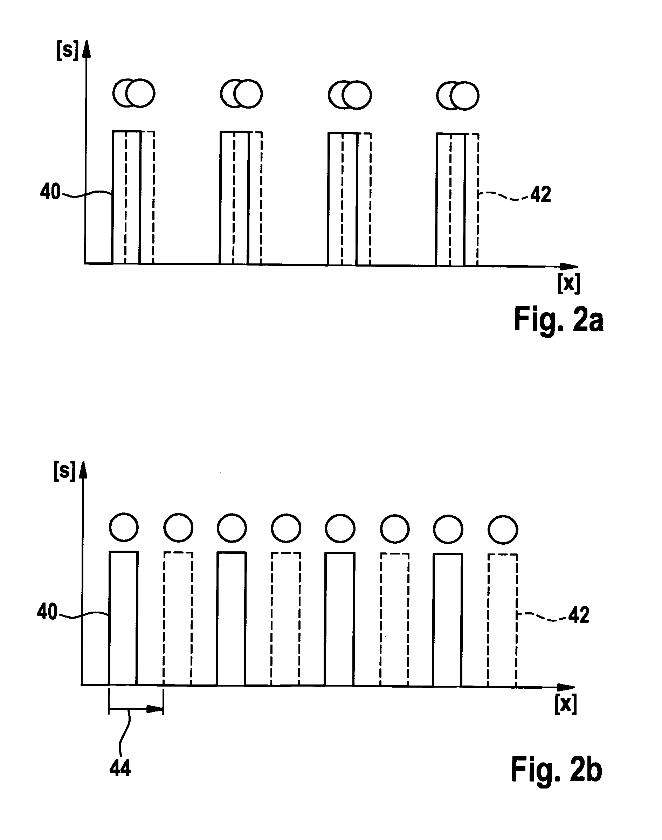

In Figur 2a ist die Verteilung der Abtastorte der Umgebung eines Fahrzeugs in Bewegungsrichtung dargestellt wobei die beiden verwendeten Sensoren nicht mit der Geschwindigkeit des Fahrzeugs synchronisiert wurden. In Figur 2b ist die gleiche Situation mit Synchronisierung der Sensoren mit der Fahrzeuggeschwindigkeit aufgetragen.

Der Figur 2a kann die örtliche Verteilung der Abtastpositionen des ersten und des zweiten Ultraschallsensors 12, 14 eines Fahrzeugs 10 in Bewegungsrichtung entnommen werden. Die Bewegungsrichtung ist dabei mit dem Bezugszeichen X versehen, die Abtastungen mit dem Bezugszeichen S. Die durchgezogene Linie kennzeichnet dabei die Abtastpositionen des ersten Ultraschallsensors 12 und die gestrichelte Linie 42 kennzeichnet die Abtastpositionen des zweiten Ultraschallsensors 14. Da in dem gezeigten Beispiel die Abtastung der beiden Sensoren nicht mit der Geschwindigkeit des Fahrzeugs und dem Abstand der Sensoren zueinander synchronisiert wurden, überlappen die Abtastpositionen 40 des ersten Ultraschallsensors 12 mit den Abtastpositionen 42 des zweiten Ultraschallsensors 14.

In der in Figur 2b gezeigten Situation wurde die Abtastung der Ultraschallsensoren 12 und 14 mit der Geschwindigkeit des Fahrzeugs 10 und im Abstand 16 der Sensoren zueinander synchronisiert. Die Verteilung der Abtastpositionen ist zueinander äquidistant.

## Patentansprüche

1. Verfahren zur Abtastung der Umgebung eines sich bewegenden Fahrzeugs (10) unter Verwendung mindestens zweier an einer Seite des Fahrzeugs (10) voneinander beabstandet angeordneten Sensoren (12, 14), wobei die mindestens zwei Sensoren mit einer vorgegebenen Abtastrate Abtastpunkte (40, 42) der Umgebung liefern, wobei die Abtastung der mindestens zwei Sensoren (12, 14) so synchronisiert wird, dass die Abtastpunkte (40, 42) der Umgebung, in Bewegungsrichtung des Fahrzeugs (10) gesehen, zyklisch aufeinanderfolgend von den mindestens zwei Sensoren (12, 14) geliefert werden, **dadurch gekennzeichnet, dass** eine Anzahl der Abtastpunkte, die auf einer Strecke, die dem Abstand (16) zwischen den beiden Sensoren (12, 14) entspricht, ungerade ist, und dass bei der Synchronisierung der mindestens zwei Sensoren ein Zeitversatz zwischen den Abtastzeitpunkten der Sensoren (12, 14) untereinander in Abhängigkeit der Fahrzeuggeschwindigkeit und des Abstands der Sensoren (16) zueinander geregelt wird.

2. Verfahren gemäß Anspruch 1, **dadurch gekennzeichnet, dass** die Sensoren (12, 14) so synchronisiert werden, dass die Abstände (44) zwischen zwei Abtastpunkten (40, 42) im Wesentlichen gleich sind.

3. Verfahren gemäß Anspruch 1 oder 2, **dadurch gekennzeichnet, dass** bei der Synchronisierung der mindestens zwei Sensoren (12, 14) die Abtastrate in Abhängigkeit der Fahrzeuggeschwindigkeit und des Abstands der Sensoren (16) zueinander geregelt wird.

4. Verfahren gemäß einem der Ansprüche 1 bis 3, **dadurch gekennzeichnet, dass** jeder der mindestens zwei Sensoren (12, 14) mit der gleichen Abtastrate Abtastpunkte (40, 42) liefert.

5. Verfahren gemäß einem der Ansprüche 1 bis 4, **dadurch gekennzeichnet, dass** Sensoren (12, 14) auf Basis von Ultraschall, Radar, Lidar, Infrarot oder optischen Kameras verwendet werden.

6. Computerprogramm zur Durchführung des Verfahrens nach einem der Ansprüche 1 bis 5, wenn das Computerprogramm auf einer programmierbaren Computereinrichtung ausgeführt wird.

7. Vorrichtung zur Durchführung des Verfahrens nach einem der Ansprüche 1 bis 6, umfassend ein Steuergerät (18) und mindestens zwei Sensoren (12, 14), die beabstandet zueinander an einer Seite des Fahrzeugs angeordnet sind, wobei die Sensoren (12, 14) mit einer vorgegebenen Abtastrate Abtastpunkte (40, 42) der Umgebung liefern, wobei das Steuergerät (18) eingerichtet ist, die Abtastung der mindestens zwei Sensoren (12, 14) so zu synchronisieren, dass die Abtastpunkte (40, 42) der Umgebung in Bewegungsrichtung des Fahrzeugs (10) gesehen zyklisch aufeinanderfolgend von den mindestens zwei Sensoren (12, 14) geliefert werden, **dadurch gekennzeichnet, dass** das Steuergerät eingerichtet ist, eine Anzahl der Abtastpunkte, die auf einer Strecke, die dem Abstand (16) zwischen den beiden Sensoren (12, 14) entspricht, ungerade ist, zu erzeugen und bei der Synchronisierung der mindestens zwei Sensoren einen Zeitversatz zwischen den Abtastzeitpunkten der Sensoren (12, 14) untereinander in Abhängigkeit der Fahrzeuggeschwindigkeit und des Abstands der Sensoren (16) zueinander zu regeln.

8. Vorrichtung gemäß Anspruch 7, **dadurch gekennzeichnet, dass** das Steuergerät (18) eingerichtet ist, die Sensoren (12, 14) so zu synchronisieren, dass die Abstände (44) zwischen zwei abgetasteten Bereichen (40, 42) im Wesentlichen gleich sind.

9. Vorrichtung gemäß Anspruch 7 oder 8, **dadurch gekennzeichnet, dass** die Sensoren (12, 14) als Ultraschallsensoren, Radarsensoren, Lidarsensoren, Infrarotsensoren und/oder optische Kameras ausgeführt sind.

## Claims

1. Method for scanning the environment of a moving vehicle (10) using at least two sensors (12, 14) arranged at a distance from one another on one side of the vehicle (10), the at least two sensors providing scanning points (40, 42) of the environment at a predefined scanning rate, the scanning by the at least two sensors (12, 14) being synchronized in such a manner that the scanning points (40, 42) of the environment, as seen in the direction of movement of the vehicle (10), are provided cyclically in succession by the at least two sensors (12, 14), **characterized in that** a number of the scanning points on a section corresponding to the distance (16) between the two sensors (12, 14) is uneven, and **in that**, during the synchronization of the at least two sensors, a time offset between the scanning times of the sensors (12, 14) is controlled on the basis of the vehicle speed and the distance between the sensors (16).

2. Method according to Claim 1, **characterized in that** the sensors (12, 14) are synchronized in such a manner that the distances (44) between two scanning points (40, 42) are substantially the same.

3. Method according to Claim 1 or 2, **characterized in that**, during the synchronization of the at least two sensors (12, 14), the scanning rate is controlled on the basis of the vehicle speed and the distance between the sensors (16).

4. Method according to one of Claims 1 to 3, **characterized in that** each of the at least two sensors (12, 14) provides scanning points (40, 42) at the same scanning rate.

5. Method according to one of Claims 1 to 4, **characterized in that** sensors (12, 14) based on ultrasound, radar, lidar, infrared or optical cameras are used.

6. Computer program for carrying out the method according to one of Claims 1 to 5 when the computer program is executed on a programmable computer device.

7. Apparatus for carrying out the method according to one of Claims 1 to 6, comprising a control device (18) and at least two sensors (12, 14) which are arranged at a distance from one another on one side of the vehicle, the sensors (12, 14) providing scanning points (40, 42) of the environment at a predefined scanning rate, the control device (18) being set up to synchronize the scanning by the at least two sensors (12, 14) in such a manner that the scanning points (40, 42) of the environment, as seen in the direction of movement of the vehicle (10), are provided cyclically in succession by the at least two sensors (12, 14), **characterized in that** the control device is set up to generate a number of the scanning points which is uneven on a section corresponding to the distance (16) between the two sensors (12, 14) and, during the synchronization of the at least two sensors, to control a time offset between the scanning times of the sensors (12, 14) on the basis of the vehicle speed and the distance between the sensors (16).

8. Apparatus according to Claim 7, **characterized in that** the control device (18) is set up to synchronize the sensors (12, 14) in such a manner that the distances (44) between two scanned regions (40, 42) are substantially the same.

9. Apparatus according to Claim 7 or 8, **characterized in that** the sensors (12, 14) are in the form of ultrasound sensors, radar sensors, lidar sensors, infrared sensors and/or optical cameras.

## Revendications

1. Procédé d'échantillonnage de l'environnement d'un véhicule en mouvement (10) par utilisation d'au moins deux capteurs (12, 14) disposés de manière espacée l'un de l'autre d'un côté du véhicule (10), dans lequel les au moins deux capteurs délivrent des points d'échantillonnage (40, 42) de l'environnement à une fréquence d'échantillonnage prédéterminée, dans lequel l'échantillonnage des au moins deux capteurs (12, 14) est synchronisé de manière à ce que les points d'échantillonnage (40, 42) de l'environnement, vus dans la direction de déplacement du véhicule (10), soient délivrés de manière séquentielle et cyclique par les au moins deux capteurs (12, 14), **caractérisé en ce qu'**un certain nombre des points d'échantillonnage qui est irrégulier sur un parcours correspond à la distance (16) entre les deux capteurs (12, 14), et **en ce que**, lors de la synchronisation des au moins deux capteurs, un décalage temporel entre les points d'échantillonnage des capteurs (12, 14) l'un par rapport à l'autre est régulé en fonction de la vitesse du véhicule et de la distance des capteurs (16) l'un par rapport à l'autre.

2. Procédé selon la revendication 1, **caractérisé en ce que** les capteurs (12, 14) sont synchronisés de manière à ce que les distances (44) entre deux points d'échantillonnage (40, 42) soient sensiblement identiques.

3. Procédé selon la revendication 1 ou 2, **caractérisé en ce que**, lors de la synchronisation des au moins deux capteurs (12, 14), la fréquence d'échantillonnage est régulée en fonction de la vitesse du véhicule et de la distance des capteurs (16) l'un par rapport à l'autre.

4. Procédé selon l'une quelconque des revendications 1 à 3, **caractérisé en ce que** chacun des au moins deux capteurs (12, 14) délivre des points d'échantillonnage (40, 42) à la même fréquence d'échantillonnage.

5. Procédé selon l'une quelconque des revendications 1 à 4, **caractérisé en ce que** des capteurs (12, 14) à ultrasons, de type radar, de type Lidar, infrarouges ou des caméras optiques sont utilisés.

6. Programme informatique destiné à mettre en oeuvre le procédé selon l'une quelconque des revendications 1 à 5, lorsque le programme informatique est exécuté sur un dispositif informatique programmable.

7. Dispositif destiné à mettre en oeuvre le procédé selon l'une quelconque des revendications 1 à 6, comprenant un appareil de commande (18) et au moins deux capteurs (12, 14) qui sont disposés de manière espacée l'un de l'autre d'un côté du véhicule, dans lequel les capteurs (12, 14) délivrent des points d'échantillonnage (40, 42) de l'environnement à une fréquence d'échantillonnage prédéterminée, dans lequel l'appareil de commande (18) est conçu pour synchroniser l'échantillonnage des au moins deux capteurs (12, 14) de manière à ce que les points d'échantillonnage (40, 42) de l'environnement, vus dans la direction de déplacement du véhicule (10), soient délivrés de manière séquentielle et cyclique par les au moins deux capteurs (12, 14), **caractérisé en ce que** l'appareil de commande est conçu pour générer un certain nombre des points d'échantillonnage qui est irrégulier sur un parcours correspondant à la distance (16) entre les deux capteurs (12, 14) et, lors de la synchronisation des au moins deux capteurs, pour commander un décalage temporel entre les points d'échantillonnage des capteurs (12, 14) l'un par rapport à l'autre en fonction de la vitesse du véhicule et de la distance des capteurs (16) l'un par rapport à l'autre.

8. Dispositif selon la revendication 7, **caractérisé en ce que** l'appareil de commande (18) est conçu pour synchroniser les capteurs (12, 14) de manière à ce que les distances (44) entre deux régions échantillonnées (40, 42) soient sensiblement identiques.

9. Dispositif selon la revendication 7 ou 8, **caractérisé en ce que** les capteurs (12, 14) sont réalisés sous la forme de capteurs à ultrasons, de capteurs radars, de capteurs Lidars, de capteurs infrarouges et/ou de caméras optiques.
